# FASCICULE DE BREVET EUROPEEN

(11) **EP 2 804 746 B1**
(45) Date de publication et mention de la délivrance du brevet: **03.04.2019**
(21) Numéro de dépôt: 13704176.0
(22) Date de dépôt: 18.01.2013
(51) Int. Cl.: B29C 70/30, B29C 33/50, B29L 31/30

(54) **ENSEMBLE D'OUTILLAGE ET PROCÉDÉ DE FABRICATION D'UNE PIÈCE EN MATÉRIAU COMPOSITE**
WERKZEUGBAUGRUPPE UND VERFAHREN ZUR HERSTELLUNG EINES TEILS AUS EINEM VERBUNDWERKSTOFF
TOOL ASSEMBLY, AND METHOD FOR MANUFACTURING A PART MADE OF A COMPOSITE MATERIAL

(30) Priorité: 18.01.2012 FR 1250482
(43) Date de publication de la demande: 26.11.2014
(73) Titulaire: Safran Nacelles, 76700 Gonfreville-l'Orcher (FR)
(72) Inventeur: VAUCHEL, Guy, Bernard, F-76700 Harfleur (FR); PILLON, Eric, F-76110 Benarville (FR)
(74) Mandataire: Gaillarde, Frédéric F. Ch.
(86) Numéro de dépôt international: PCT/FR2013/050117
(87) Numéro de publication internationale: WO 2013/107993

(56) Documents cités:
- EP-A1- 2 181 823
- WO-A1-2005/070668
- DE-A1- 2 352 373
- DE-A1-102010 013 478
- GB-A- 1 389 212
- US-A- 859 681
- US-A- 860 144
- US-A- 4 233 020
- US-A1- 2006 145 049

## Description

L'invention se rapporte à un ensemble d'outillage pour la fabrication d'une pièce en matériau composite par drapage et polymérisation et à un procédé de fabrication d'une pièce en matériau composite mettant en oeuvre l'ensemble d'outillage selon l'invention.

La fabrication d'une pièce en matériau composite peut être réalisée par une étape de drapage de plis contre une forme mâle, c'est-à-dire par pressage contre une forme mâle de plusieurs plis en carbone, pré-imprégné ou non d'une résine, puis par une étape polymérisation, c'est-à-dire par chauffage de l'ensemble dans un four afin de donner aux plis la rigidité souhaitée.

La pièce ainsi constituée est alors apte à être démoulée par retrait du moule.

La fabrication de pièces inférieures à 180° de circonférence est relativement facile à fabriquer. Cependant, il n'en va pas de même pour des pièces présentant des géométries s'étendant sur une zone angulaire importante, notamment supérieure à 180°, et possédant des lignes que l'on ne peut pas extraire du moule après réalisation de la pièce.

Dans un tel cas, il est alors nécessaire de réaliser un moule en plusieurs parties démontables permettant l'extraction de chaque partie après moulage.

Cela rend l'opération de fabrication plus complexe, nécessite un temps supplémentaire d'assemblage et de démontage du moule et entraîne un surcoût important de fabrication du moule.

Un exemple de pièce particulièrement difficile à réaliser en matériau composite par ce type de procédé est une structure externe de nacelle de turboréacteur telle qu'un capot mobile d'inverseur de poussée, pour une structure de nacelle de type dit « O-Duct ».

Un avion est mû par plusieurs turboréacteurs logés chacun dans une nacelle servant à canaliser les flux d'air engendrés par le turboréacteur, et qui peut également abriter un ensemble de dispositifs assurant diverses fonctions tels qu'un dispositif d'inversion de poussée dont le rôle est d'améliorer la capacité de freinage de l'avion en redirigeant vers l'avant au moins une partie de l'air du flux secondaire.

Une nacelle présente généralement une structure tubulaire comprenant une entrée d'air en amont du turboréacteur, une section médiane destinée à entourer une soufflante du turboréacteur, une section aval abritant les moyens d'inversion de poussée et destinée à entourer la chambre de combustion du turboréacteur, et est généralement terminée par une tuyère d'éjection dont la sortie est située en aval du turboréacteur.

Selon un mode de réalisation, il est connu une nacelle destinée à être supportée par un pylône du turboréacteur comprenant un dispositif d'inversion de poussée possédant un capot mobile unique monobloc sensiblement périphérique et quasi annulaire, monté coulissant sur des rails disposés de part et d'autre dudit pylône.

Un tel capot est souvent désigné par les termes anglo-saxons « O-duct », par allusion à la forme de virole d'un tel capot, par opposition au « D-Duct », qui comprend en fait deux demi-capots s'étendant chacun sur une demi-circonférence de la nacelle.

On comprend donc que la réalisation en matériau composite d'un tel capot de type O-Duct par moulage unique est une opération délicate et difficile.

Une solution actuellement utilisée est de réaliser la virole constituant le panneau en partant de la surface aérodynamique interne (externe veine) et de remonter vers l'externe de la nacelle avant de rapporter mécaniquement tout ou partie de la structure aérodynamique externe du composant de la nacelle.

En général la ligne aérodynamique interne de la structure d'inverseur présente une forme convexe interdisant de démouler la pièce réalisée par simple extraction dans un sens ou dans l'autre de l'outillage de moulage. La solution pour la réalisation en composite d'une telle structure est l'adoption d'un outillage mâle en plusieurs parties lourdes, complexes et peu fiables.

Plus précisément, un outillage dit à clés est généralement utilisé.

Un tel outillage est par exemple décrit dans le document WO 2005/070668.

Un tel outillage se présente généralement en trois, quatre ou cinq parties dont la fixation entre les éléments se fait en interne de la structure soit mécaniquement par boulonnage soit par un système complexe de liaison automatique et de manipulation de clés.

Pour la fabrication de la virole du capot mobile d'un inverseur de poussée de type O-Duct, on pourra procéder de la manière suivante.

Tout d'abord, les clés sont assemblées et étanchées entre elles. Une peau interne est ensuite drapée, polymérisée, démontée et percée si nécessaire en cas d'application acoustique sur la virole en cours.

Des âmes formant la structure interne pour donner de l'inertie à la virole peuvent être constituées par exemple par des structures en nid d'abeille ou en mousse. Ces éléments d'âmes sont positionnés et ancrés sur la première peau (peau interne).

Une peau destinée à constituer la peau externe est sur-drapée sur les éléments d'âme et l'ensemble est polymérisé afin de constituer le premier élément du capot mobile.

Indépendamment, une virole externe reposant sur les lignes externes aérodynamiques est réalisée et assemblée mécaniquement sur l'élément interne de la virole mobile.

Les inconvénients d'une structure d'outillage à clés sont notamment :
- la difficulté voire l'impossibilité d'obtenir une bonne étanchéité entre les clés entraînant une augmentation du temps de cycle de réalisation de la pièce ou une pièce à rebuter ou à usiner,
- les risques de dégradation de la surface aérodynamique liée aux jonctions des clés,
- la présence d'élément encombrants, coûteux et lourds à manipuler entraînant un risque d'endommagement des éléments du moule lors des manipulations, un temps important à consacrer à la manipulation des clés, ainsi que la nécessité d'un poste de travail adapté permettant l'accès aux clés par des opérateurs,
- la nécessité de reconditionner les clés après chaque polymérisation avec risque d'endommagement de ces dernières à chaque manipulation isolée.

Ainsi, il existe un besoin important pour une solution d'outillage et de mise en oeuvre permettant la réalisation d'une telle structure de type O-Duct, et plus généralement de toute pièce composite s'étendant sur plus de 180 degrés et/ ou présentant une structure interne convexe rendant impossible son démoulage.

A cet effet, la présente invention se rapporte à un ensemble d'outillage pour la fabrication d'une pièce en matériau composite comprenant au moins une surface convexe, comprenant au moins un moule définissant au moins en partie les lignes de ladite surface convexe et conformé pour supporter dans une position de travail au moins une opération de drapage et de polymérisation de ladite pièce, ledit ensemble étant remarquable en ce que le moule présente au moins une partie flexible alternativement entre ladite première position de travail et une deuxième position dite de retrait selon laquelle le moule est en position rétractée par rapport à sa position de travail.

Ainsi, en prévoyant un moule flexible, il est alors possible de fabriquer une pièce en matériau composite présentant une ou plusieurs surfaces convexes, grâce à un seul moule en une seule partie, ne comportant pas de clé sectorisée.

L'ensemble d'outillage selon l'invention permet de faciliter considérablement le procédé de fabrication et réduit de concert la durée de cycle de fabrication d'une telle pièce. Le passage alternatif entre une position de travail et une position de retrait du moule est assuré grâce à des moyens d'entraînement de la partie flexible du moule.

Selon l'invention, au moins la partie flexible du moule présente au moins une surface convexe dont les extrémités délimitent une portion non fermée.

Cette surface non fermée permet l'existence d'une déformée, ce qui facilite et augmente la déformation de la partie flexible du moule.

Avantageusement, l'épaisseur de la partie flexible du moule est variable.

Ceci permet de réaliser une déformée constante et proportionnelle lorsque le moule passe d'une position de travail vers une position de retrait.

Les moyens d'entraînement comprennent un ensemble de ridoirs conformés pour assurer alternativement le passage d'une position de travail vers une position de retrait du moule.

De manière alternative, les moyens d'entraînement comprennent un ensemble de cerclages conformés pour assurer alternativement le passage d'une position de travail vers une position de retrait du moule.

L'ensemble d'outillage selon l'invention comprend des moyens de support du moule et des moyens de centrage du moule.

Le moule comprend au moins une partie supplémentaire fixe conformée pour supporter au moins une opération de drapage et de polymérisation d'au moins une surface non convexe de ladite pièce.

Alternativement, le moule présente au moins une partie flexible supplémentaire conformée pour supporter au moins une opération de drapage et de polymérisation d'au moins une surface convexe de ladite pièce.

La partie flexible du moule est alternativement reliée auxdites parties supplémentaires fixe et flexible par l'intermédiaire de moyens de jonction comprenant des moyens d'étanchéité et des moyens de maintien desdites parties du moule.

La pièce à fabriquer est un capot monobloc mobile d'inverseur de poussée pour nacelle de turboréacteur.

L'invention se rapporte également à un procédé de fabrication d'une pièce en matériau composite comprenant au moins une surface interne convexe, ledit procédé étant remarquable en ce qu'il comprend les étapes suivantes visant à :
- positionner l'ensemble d'outillage dans une position correspondant à une position de travail du moule selon laquelle ledit moule supporte au moins une opération de drapage et de polymérisation ;
- disposer au moins un pli sur une surface convexe du moule ;
- polymériser lesdits plis ;
- positionner ledit ensemble d'outillage dans une position correspondant à une position de retrait du moule selon laquelle ledit moule est en position rétractée par rapport à sa position de travail ;
- retirer la pièce fabriquée en retirant ladite pièce ou ledit moule.

D'autres caractéristiques, buts et avantages de la présente invention, apparaîtront à la lecture de la description détaillée qui va suivre, selon les modes de réalisation donnés à titre d'exemples non limitatifs, et en référence aux dessins annexés sur lesquels :
- la figure 1 est une vue en perspective de l'ensemble d'outillage selon l'invention ;
- la figure 2 est une vue en perspective représentant uniquement le moule muni des moyens d'entraînement ;
- la figure 3 est une vue en coupe transversale du moule muni des moyens d'entraînement, illustrant la variation de l'épaisseur de la partie flexible du moule ;
- les figures 4 à 10 illustrent schématiquement le procédé de fabrication d'une pièce en matériau composite présentant une surface convexe, ladite pièce étant fabriquée grâce à l'ensemble d'outillage selon l'invention ;
- la figure 11 représente un deuxième mode de réalisation de l'ensemble d'outillage selon l'invention, selon lequel les moyens d'entraînement sont assurés grâce à un ensemble de cerclages ;
- la figure 12 décrit un troisième mode de réalisation de l'ensemble d'outillage selon l'invention selon lequel le moule présente une partie supplémentaire fixe adaptée pour la fabrication d'une pièce composite présentant une surface non convexe ;
- la figure 13 représente les moyens de maintien entre la partie fixe et la partie flexible du moule selon le troisième mode de réalisation de l'ensemble d'outillage selon l'invention ;
- la figure 14 est un agrandissement de la zone d'étanchéité entre la partie fixe et la partie flexible du moule ;
- la figure 15 est une variante des moyens de maintien entre les parties fixe et flexible du moule ;
- la figure 16 représente un quatrième mode de réalisation de l'ensemble d'outillage selon l'invention, selon lequel le moule présente une partie supplémentaire flexible permettant la fabrication d'une pièce composite présentant au moins deux surfaces convexes distinctes.

Sur l'ensemble des figures, des références identiques ou analogues désignent des organes ou ensembles d'organes identiques ou analogues.

Par ailleurs, sur l'ensemble des figures, l'ensemble d'outillage permet la fabrication de la surface interne d'un capot mobile monobloc « O-Duct » d'un inverseur de poussée de nacelle pour turboréacteur. Le terme « O-Duct » désigne des structures pour lesquelles la circonférence est supérieure à 180 degrés. Cependant, l'ensemble d'outillage selon l'invention peut également être utilisé pour fabriquer des structures inférieures à 180 degrés de circonférence si l'homme du métier y trouve un intérêt. Plus généralement, l'ensemble d'outillage selon l'invention permet la réalisation de toutes pièces présentant au moins une forme convexe rendant impossible son démoulage.

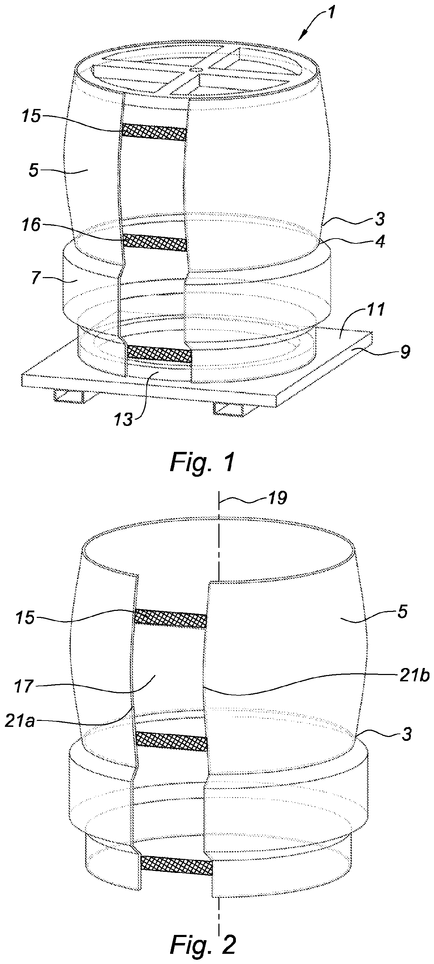

On se réfère à la figure 1, illustrant l'ensemble d'outillage 1 selon l'invention.

L'ensemble d'outillage comprend un moule 3 réalisé de manière préférée en matériau composite, tel qu'en carbone époxy, ce qui procure de bonnes propriétés d'élasticité et de rigidité du moule. Alternativement, le moule peut être métallique, ou en tout autre matériau connu de l'homme du métier et présentant des propriétés mécaniques permettant de combiner élasticité et rigidité du moule.

Le moule 3 présente une partie flexible 4, comprenant une surface convexe 5 et une surface non convexe 7. La surface convexe 5 est destinée à former une zone acoustique du capot mobile d'inverseur (zone aval de la nacelle) et la surface non convexe 7 est destinée à former la zone du capot mobile à l'intérieur de laquelle viendront se loger les volets permettant la réorientation du flux d'air pour une position déployée de ces derniers (zone amont de la nacelle). A cet effet, les surfaces convexe et non convexe du moule définissent les lignes de la surface de la pièce à fabriquer.

Le moule 3 est supporté en position verticale par des moyens de support constitués par un socle 9 se présentant sous la forme d'une plaque plane 11 en partie inférieure de laquelle sont positionnés deux appuis au sol de ladite plaque. Le moule est maintenu en position sur ladite plaque grâce à des moyens de centrage du moule constitué par un centreur 13 solidaire de la plaque 11. Selon une variante non représentée sur les figures, il est envisageable de positionner le moule en position horizontale grâce à un support de moule adapté à cette orientation et permettant le dégagement de la pièce du côté opposé du support du moule.

L'ensemble d'outillage 1 comprend des moyens d'entraînement 15 du moule 3. Ces moyens sont aptes à être activés mécaniquement ou hydrauliquement par l'intermédiaire d'un dispositif non représenté, ou encore manuellement, ou encore par tout autre système d'entraînement connu de l'homme du métier.

Comme décrit plus en détail ci-après, l'activation des moyens d'entraînement 15 va permettre de faire varier la circonférence du moule.

Les moyens d'entraînement 15 sont constitués par des ridoirs 16 positionnés à l'intérieur du moule 3.

Toutefois, les moyens d'entraînement peuvent être constitués par tout autre système manuel ou automatisé connu de l'homme du métier, tel que par exemple un ensemble de vérins électriques, hydrauliques ou pneumatiques.

On se réfère à présent à la figure 2, illustrant le moule 3 muni des moyens d'entraînement 15.

Le moule 3 présente sur sa surface convexe 5 une portion non fermée 17 dans une direction sensiblement parallèle à un axe de révolution 19 du moule.

Le moule 3 est ainsi non fermé, ce qui définit un degré de déformée du moule.

La portion non fermée permet au moule 3 d'adopter des circonférences variables commandées par les moyens d'entraînement 15. En effet, lors de l'activation des moyens d'entraînement, les extrémités 21a et 21 b ont tendance à se rapprocher mutuellement, ce qui permet de réduire la circonférence du moule 3 et d'entraîner ainsi son resserrement afin de retirer le moule de la pièce fabriquée.

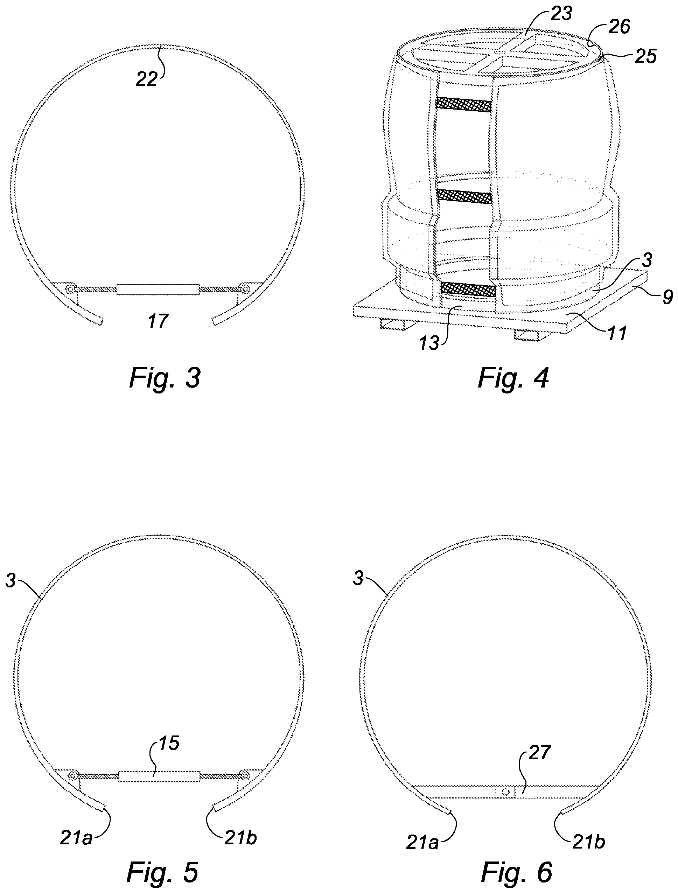

A cet effet, le moule adopte avantageusement une épaisseur variable afin d'assurer une déformation constante. Comme représenté en figure 3, illustrant une section transversale du moule, la partie flexible du moule présente une zone d'épaisseur réduite sur la portion 22 opposée à la portion non fermée 17, ce qui permet de conserver une section circulaire du moule, lorsque ce dernier passe d'une position de travail vers une position de retrait.

Selon une variante, il est prévu qu'une section longitudinale de la paroi flexible du moule présente une épaisseur non constante.

Le procédé de fabrication d'une pièce en matériau composite de forme convexe est décrit ci-après, en référence aux figures 4 à 10.

En se référant à la figure 4, le moule 3 est supporté par le socle 9 et maintenu en position par des moyens de centrage du moule. De tels moyens de centrage comprennent un centreur 13 solidaire de la plaque 11 du socle, et un centreur 23 positionné à proximité de l'extrémité supérieure 25 du moule 3.

De tels centreurs adoptent avantageusement une forme circulaire dont le diamètre correspond sensiblement à celui de la pièce à fabriquer, et prennent appui sur la surface interne 26 du moule 3. Toutefois, de tels centreurs peuvent présenter une forme autre que la forme circulaire précitée si l'homme du métier y trouve un intérêt particulier.

Les centreurs 13, 23 permettent avantageusement de fournir un appui périphérique au moule et d'assurer une mise en forme précise du moule. Le moule 3 se trouve ainsi dans une position dite de travail, position qui est maintenant conformée pour la fabrication d'une pièce en matériau composite par drapage de plusieurs plis et par polymérisation desdits plis.

Alternativement, il est prévu de disposer des centreurs intermédiaires, c'est-à-dire des centreurs positionnés parallèlement aux centreurs 13 et 23, mais à une altitude différente de celle des centreurs 13, 23. Ces centreurs intermédiaires supplémentaires sont particulièrement intéressants pour augmenter la précision de réglage et de maintien en position du moule lors des étapes de drapage et de polymérisation des plis.

Ces centreurs peuvent être associés entre eux par le milieu pour être par exemple utilisés en position horizontale pour une meilleure intégration dans le four de polymérisation de la pièce.

De manière connue, l'étape de drapage consiste à venir presser sur la surface du moule plusieurs plis en carbone pré-imprégné d'une résine. Plusieurs plis sont empilés contre les surfaces convexes et non convexes du moule, formant ainsi des couches successives, et maintenues plaquées contre les surfaces externes du moule grâce à une vessie de mise sous vide. Ensuite, afin de fournir une cohésion aux couches jusqu'alors maintenues sur le moule, on polymérise les plis. Typiquement, cette opération consiste à placer dans un four de polymérisation l'ensemble d'outillage sur lequel ont été positionnés les plis de tissu, afin de chauffer lesdits plis pour donner à la pièce la résistance mécanique souhaitée.

Bien évidemment, l'ensemble d'outillage peut permettre de réaliser des étapes optionnelles supplémentaires aux étapes de drapage et de polymérisation, comme par exemple la mise en place de couches de nida préalablement aux étapes de drapage et de polymérisation de l'ensemble.

La position de travail qui vient d'être décrite est illustrée en vue de dessus aux figures 5 et 6, les centreurs et le socle n'étant pas représentés pour une meilleure visibilité.

L'écartement entre les extrémités 21a et 21b du moule 3 est réglé grâce aux moyens d'entraînement 15, qui se trouvent en position étirée pour une position de travail du moule 3.

Selon une variante représentée figure 6, il est prévu de pourvoir l'ensemble d'outillage 1 de moyens de maintien en position 27. Ces moyens peuvent être constitués par indexage et piontage manuel ou automatique et permettent de maintenir l'écartement souhaité entre les extrémités 21a et 21b du moule 3.

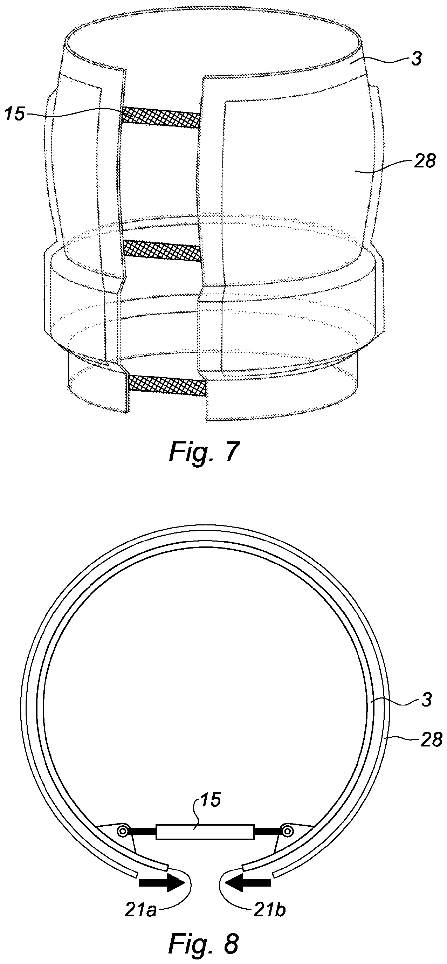

On se réfère à la figure 7. Lorsque l'utilisateur a terminé les étapes qui permettent la fabrication de la pièce en matériau composite 28, l'utilisateur démonte le socle et les centreurs de l'ensemble d'outillage. Le moule 3 est ainsi apte à être resserré grâce aux moyens d'entraînement 15.

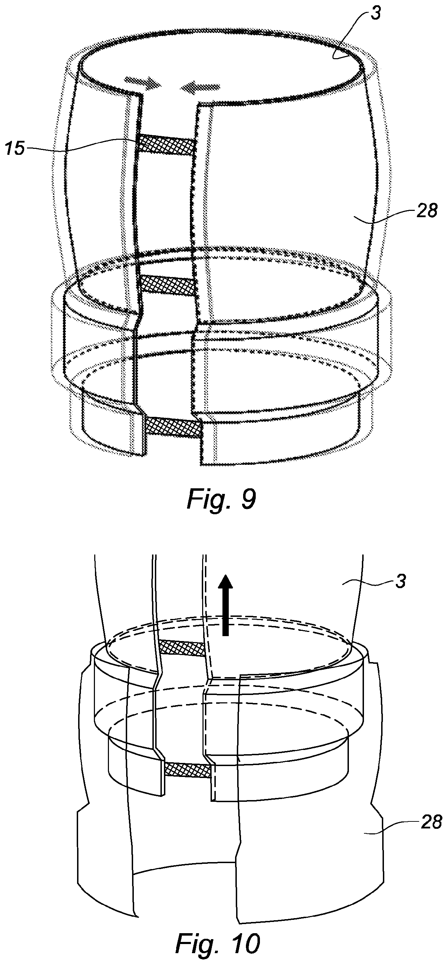

On se réfère aux figures 8 et 9 illustrant l'étape de resserrage du moule.

L'utilisateur active les moyens d'entraînement 15 du moule, ce qui a pour effet de rapprocher mutuellement les extrémités 21a et 21b du moule 3. Le moule passe alors de la position de travail précédemment décrite vers une position de retrait du moule, position selon laquelle les moyens d'entraînement sont rétractés par rapport à leur position étirée précédente.

Le moule 3 ne supporte ainsi plus la pièce fabriquée 28, comme visible aux figures 8 et 9.

L'utilisateur procède à présent à la phase de retrait du moule, correspondant à un retrait du moule 3 de la pièce fabriquée 28, comme représenté en figure 10. De manière alternative, l'utilisateur peut également retirer la pièce fabriquée du moule.

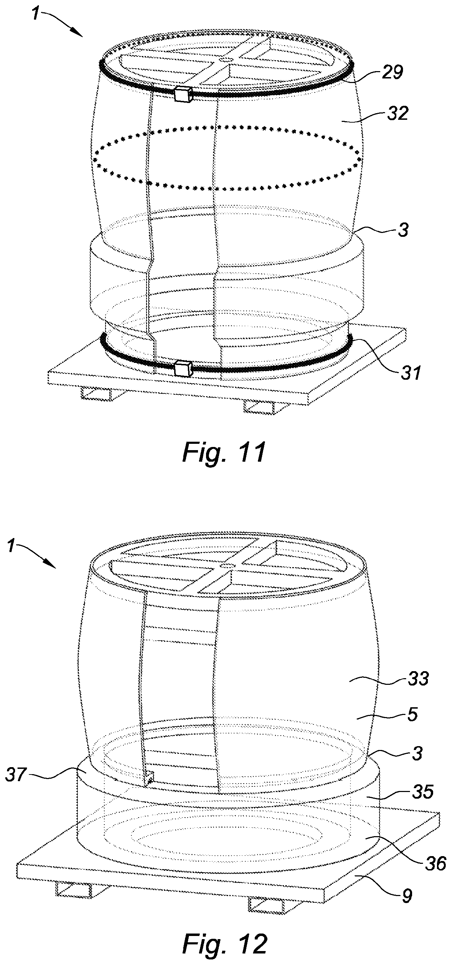

On se réfère à présent à la figure 11, illustrant un deuxième mode de réalisation des moyens d'entraînement du moule.

Selon ce mode de réalisation, l'ensemble d'outillage 1 est identique au mode de réalisation précédent à ceci-près que les moyens d'entraînement comprennent un cerclage supérieur 29 et un cerclage inférieur 31.

Typiquement, ces cerclages sont positionnés sur la paroi extérieure 32 du moule 3, en dehors des zones du moule destinées au drapage des plis de tissu et de la mise en place de la vessie de mise sous vide.

Ces cerclages sont maintenus à la paroi extérieure du moule grâce à des positionneurs adaptés ou rapportés sur le moule ou le centreur 23.

Ces cerclages présentent l'avantage de remplacer au moins les ridoirs 15 extrêmes, ce qui permet d'alléger la structure du moule en masse et en nombre de composants.

On se réfère à présent à la figure 12, illustrant un troisième mode de réalisation de l'ensemble d'outillage selon l'invention.

Selon cette variante, le moule 3 est réalisé en deux parties indépendantes. Le moule 3 présente une partie flexible 33 comprenant une surface convexe 5 conforme à la description qui vient d'être faite pour les deux modes de réalisation précédents, et une partie fixe non déformable 35.

L'ensemble d'outillage comprend des moyens d'entraînement de la partie flexible du moule et des centreurs positionnés à proximité des extrémités inférieure et supérieure du moule.

La partie flexible peut bien sûr également comprendre une surface non convexe si l'homme du métier y trouve un intérêt particulier.

La partie fixe 35 adopte la forme d'un cylindre, et permet de fabriquer par drapage et polymérisation une partie de la pièce à fabriquer qui ne présente pas de surface convexe qui lui interdirait le démoulage sans rétrécissement de la circonférence du moule.

L'extrémité inférieure 36 de la partie fixe 35 repose sur le socle 9 de l'ensemble d'outillage 1. En son extrémité supérieure 37, la partie fixe du moule supporte la partie flexible 33 dudit moule.

Alternativement, la partie fixe du moule peut bien sûr reposer sur la partie flexible.

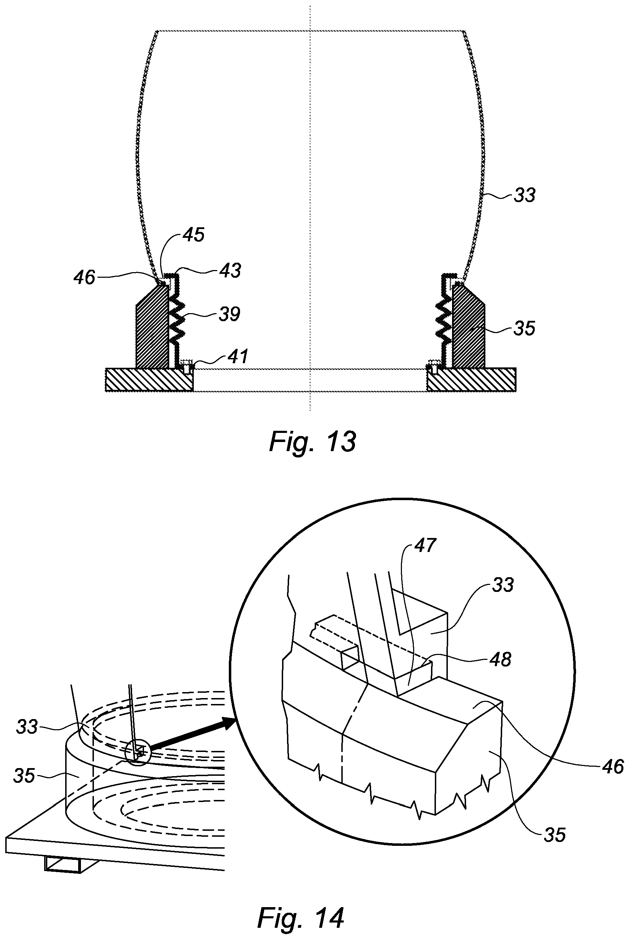

La figure 13 illustre un exemple de maintien de la partie flexible 33 sur la partie fixe 35 du moule.

Le maintien entre les deux parties du moule est réalisé grâce à un système de maintien élastique 39, monobloc ou sectorisé, dont une extrémité 41 est fixée au socle 9 par vissage, et dont l'autre extrémité 43, en appui sur une surface plane 45 de la partie flexible 33, elle-même en appui sur une surface plane 46 de la partie fixe 35, vient procurer une pression. Un tel système de maintien élastique permet de créer un effort constant périphérique procurant une pression assurant le maintien du moule flexible sur le moule fixe.

Alternativement, si l'homme du métier le juge opportun, cette interface peut être directement vissée ou pincée sans artifice élastique selon le temps d'accès à la mise en oeuvre du moule désiré.

L'étanchéité selon la première variante de ce mode de réalisation est assurée par l'intermédiaire d'un joint 47 visible en figure 14. Le joint est positionné sur la surface plane 46 de la partie fixe 35 et s'insère dans une gorge circonférentielle 48 de la partie flexible 33.

Afin d'accroître l'étanchéité entre les parties fixe et flexible du moule, le joint 47 peut présenter un retour de joint sur la partie externe, ce retour de joint permettant d'assurer la continuité de l'étanchéité de la vessie de mise sous vide.

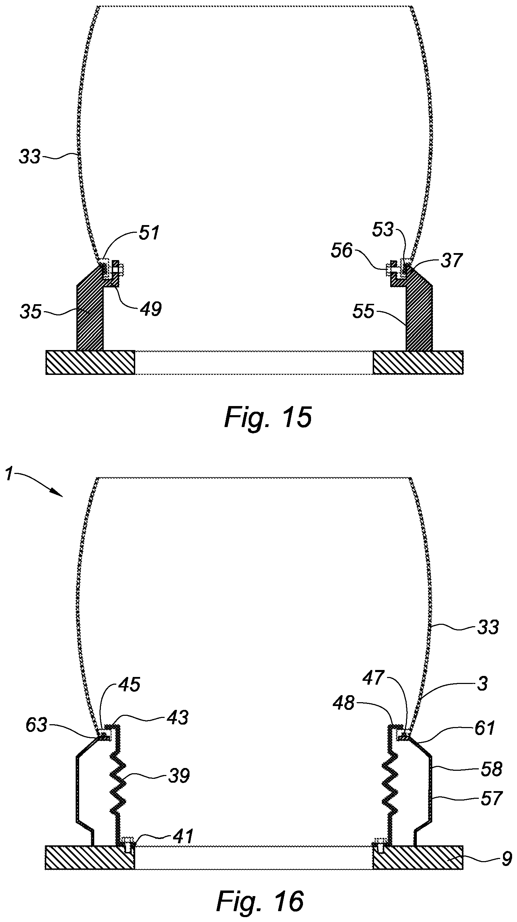

Selon une variante représentée en figure 15, l'interface entre les partie fixe et flexible du moule n'est plus plane mais circonférentielle, c'est-à-dire que la partie fixe 35 comprend en son extrémité supérieure 37 une gorge circonférentielle 49 conformée pour recevoir une partie mâle 51 de la partie flexible 33 du moule. La fixation entre les deux parties du moule est alors réalisée par plaquage de la partie flexible 33 sur la partie fixe 35.

L'étanchéité est réalisée selon cette deuxième variante grâce à un joint 53 dont la section présente une forme de L renversé, en appui sur une surface interne 55 de la partie fixe 35. Une vis 56 appuie sur la structure flexible 33 afin que le joint soit plaqué contre la surface interne 55 de la partie fixe 35.

Selon ces deux configurations décrites assurant l'étanchéité du moule, le joint 47, 53 est de manière préférée réalisé en silicone, ce qui permet de résister à la température de polymérisation lors de l'étape de polymérisation des plis. Bien évidemment, le joint 47, 53 peut être réalisé en tout autre matériau présentant de bonnes propriétés d'étanchéité et de tenue à la chaleur.

Selon ce troisième mode de réalisation de l'invention, la partie flexible du moule est réduite par rapport aux deux premières variantes, ce qui permet de faciliter la manipulation du moule et d'avoir moins de masse à déplacer. Par ailleurs, la partie ouverte de la partie flexible du moule étant réduite, le nombre de moyens d'entraînement du moule sera également limité par rapport aux deux premiers modes de réalisation.

On se réfère à présent à la figure 16, illustrant un quatrième mode de réalisation de l'invention.

Selon cette configuration de l'ensemble d'outillage selon l'invention, le moule comprend deux parties flexibles 33, 57 superposées.

La partie flexible 57 présente une surface convexe 58 et permet de fabriquer par drapage et polymérisation une partie de la pièce à fabriquer qui présente une surface convexe distincte de la surface convexe réalisable par la partie flexible 33.

La partie flexible 57 peut bien sûr également comprendre une surface non convexe si l'homme du métier y trouve un intérêt particulier.

La partie flexible 57 comprend des moyens d'entraînement similaires à ceux précédemment décrits en référence à la partie flexible 33.

L'extrémité inférieure 59 de la partie flexible 57 repose sur le socle 9 de l'ensemble d'outillage 1. En son extrémité supérieure 61, la partie flexible 57 supporte la partie flexible 33 du moule 3.

Le maintien entre les deux parties du moule est réalisé grâce au système de pression 39 précédemment décrit, dont l'extrémité 41 est fixée au socle 9 par vissage, et dont l'autre extrémité 43 vient en appui contre la surface plane 45 de la partie flexible 33, elle-même en appui sur la surface plane 63 de la partie flexible 57.

L'étanchéité entre les deux parties du moule 3 est assurée par l'intermédiaire d'un joint 47 conforme à la description faite pour le troisième mode de réalisation de l'ensemble, lorsque le moule comprenait une partie flexible et une partie fixe. Le joint 47 est positionné sur la surface plane 63 de la partie flexible 57 et s'insère dans la gorge circonférentielle 48 de la partie flexible 33.

Selon ce quatrième mode de réalisation de l'invention, la partie flexible 57 permet de réaliser une pièce en matériau composite qui présente au moins deux surfaces convexes distinctes.

Le procédé de fabrication de la présente invention permet la fabrication d'une pièce en matériau composite présentant une surface convexe. Ce procédé se trouve considérablement simplifié par rapport à l'art antérieur grâce à l'ensemble d'outillage selon l'invention. En effet, ledit ensemble permet la fabrication d'une pièce composite présentant au moins une surface convexe, sans nécessiter l'utilisation de plusieurs ensembles d'outillage.

La présente invention permet ainsi de réduire le nombre de moules nécessaires à la fabrication de pièces présentant des surfaces convexes, ce qui d'une part réduit la masse de l'outillage et d'autre part facilite considérablement le procédé de fabrication et réduit en outre la durée de cycle de fabrication d'une telle pièce. Par ailleurs, le coût de fabrication de l'outillage se trouve par conséquent également réduit.

Comme il va de soi, l'invention ne se limite pas aux seules formes de réalisation de cet ensemble d'outillage, décrites ci-dessus à titre d'exemples, mais elle embrasse au contraire toutes les variantes. D'autre part, le procédé de fabrication peut bien évidemment être amené à être adapté à chacun des modes de réalisation de l'ensemble d'outillage envisagés dans la description.

## Revendications

1. Ensemble d'outillage (1) pour la fabrication d'une pièce en matériau composite (28) présentant une circonférence supérieure à 180° tel qu'un capot mobile monobloc d'un inverseur de poussée de nacelle pour turboréacteur et comprenant au moins une surface convexe, ledit ensemble comprenant un moule (3) unique en une seule partie définissant au moins en partie les lignes de ladite surface convexe et conformé pour supporter dans une position de travail au moins une opération de drapage et de polymérisation de ladite pièce à fabriquer, ledit moule présentant au moins une partie flexible (4, 33) alternativement entre ladite première position de travail et une deuxième position dite de retrait selon laquelle le moule est en position rétractée par rapport à sa position de travail, ladite partie flexible (4, 33) présentant une circonférence supérieure à 180° et définissant les lignes de la surface de la pièce à fabriquer, ledit ensemble étant **caractérisé en ce qu'**au moins la partie flexible (4, 33) du moule (3) présente au moins une surface convexe autour d'un axe perpendiculaire à l'axe de révolution du moule et dont les extrémités (21a, 21b) délimitent une portion (17) non fermée dans une direction sensiblement parallèle à un axe de révolution (19) du moule.

2. Ensemble d'outillage (1) selon la revendication 1, **caractérisé en ce que** le passage alternatif entre une position de travail et une position de retrait du moule est assuré grâce à des moyens d'entraînement (15) de la partie flexible du moule.

3. Ensemble d'outillage (1) selon l'une des revendications 1 ou2 3, **caractérisé en ce que** l'épaisseur de la partie flexible (4, 33) du moule (3) est variable.

4. Ensemble d'outillage (1) selon l'une quelconque des revendications 2 ou 3, **caractérisé en ce que** les moyens d'entraînement (15) comprennent un ensemble de ridoirs (16) conformés pour assurer alternativement le passage d'une position de travail vers une position de retrait du moule (3).

5. Ensemble d'outillage (1) selon l'une quelconque des revendications 2 ou 3, **caractérisé en ce que** les moyens d'entraînement (15) comprennent un ensemble de cerclages (29, 31) conformés pour assurer alternativement le passage d'une position de travail vers une position de retrait du moule.

6. Ensemble d'outillage (1) selon l'une quelconque des revendications 1 à 5, **caractérisé en ce qu'**il comprend des moyens de support (9) du moule (3) et des moyens de centrage (13, 23) du moule.

7. Ensemble d'outillage (1) selon l'une quelconque des revendications 1 à 6, **caractérisé en ce que** le moule (3) comprend au moins une partie supplémentaire fixe (35) conformée pour supporter au moins une opération de drapage et de polymérisation d'au moins une surface non convexe de ladite pièce.

8. Ensemble d'outillage (1) selon l'une quelconque des revendications 1 à 6, **caractérisé en ce que** le moule (3) présente au moins une partie flexible supplémentaire (57) conformée pour supporter au moins une opération de drapage et de polymérisation d'au moins une surface convexe de ladite pièce.

9. Ensemble d'outillage (1) selon l'une quelconque des revendications 7 ou 8, **caractérisé en ce que** la partie flexible (4) du moule est alternativement reliée auxdites parties supplémentaires fixe (35) et flexible (57) par l'intermédiaire de moyens de jonction comprenant des moyens d'étanchéité (47, 53) et des moyens de maintien desdites parties du moule (3).

10. Ensemble d'outillage (1) selon l'une quelconque des revendications 1 à 9, **caractérisé en ce que** la pièce à fabriquer est un capot monobloc mobile d'inverseur de poussée pour nacelle de turboréacteur.

11. Procédé de fabrication d'une pièce en matériau composite présentant une circonférence supérieure à 180° tel qu'un capot mobile monobloc d'un inverseur de poussée de nacelle pour turboréacteur et comprenant au moins une surface interne convexe, **caractérisé en ce qu'**il comprend les étapes suivantes visant à :
- positionner l'ensemble d'outillage (1) conforme à l'une quelconque des revendications 1 à 10 dans une position correspondant à une position de travail du moule (3) selon laquelle ledit moule supporte au moins une opération de drapage et de polymérisation ;
- disposer au moins un pli sur une surface convexe du moule ;
- polymériser lesdits plis ;
- positionner ledit ensemble d'outillage dans une position correspondant à une position de retrait du moule selon laquelle ledit moule est en position rétractée par rapport à sa position de travail ;
- retirer la pièce fabriquée (28) en retirant ladite pièce ou ledit moule.

## Patentansprüche

1. Werkzeugsatz (1) zur Herstellung eines Werkstücks aus Verbundwerkstoff (28), einen Umfang von mehr als 180° aufweisend, wie eine einstückige bewegliche Abdeckung einer Schubumkehr einer Gondel für ein Turbotriebwerk, und mindestens eine konvexe Oberfläche umfassend, wobei der Satz eine einzige Form (3) in nur einem Teil umfasst, die mindestens teilweise die Linien der konvexen Oberfläche definiert und ausgeformt ist, um in einer Arbeitsposition mindestens einen Einhüllungs- und Polymerisationsvorgang des herzustellenden Werkstücks zu unterstützen, wobei die Form mindestens einen flexiblen Teil (4, 33) abwechselnd zwischen der ersten Arbeitsposition und einer zweiten, Rückzugsposition genannten, Position aufweist, bei der sich die Form in zurückgezogener Position im Verhältnis zu ihrer Arbeitsposition befindet, wobei der flexible Teil (4, 33) einen Umfang von mehr als 180° aufweist und die Linien der Oberfläche des herzustellenden Werkstücks definiert, wobei der Satz **dadurch gekennzeichnet ist, dass** mindestens der flexible Teil (4, 33) der Form (3) mindestens eine konvexe Oberfläche um eine senkrechte Achse zur Rotationsachse der Form aufweist, und deren Enden (21a, 21b) einen Abschnitt (17) eingrenzen, der in eine Richtung nicht geschlossen ist, die im Wesentlichen parallel zu einer Rotationsachse (19) der Form verläuft.

2. Werkzeugsatz (1) nach Anspruch 1, **dadurch gekennzeichnet, dass** der abwechselnde Übergang zwischen einer Arbeitsposition und einer Rückzugsposition der Form dank Antriebsmitteln (15) des flexiblen Teils der Form gewährleistet wird.

3. Werkzeugsatz (1) nach einem der Ansprüche 1 oder 2, 3, **dadurch gekennzeichnet, dass** die Stärke des flexiblen Teils (4, 33) der Form (3) variabel ist.

4. Werkzeugsatz (1) nach einem der Ansprüche 2 oder 3, **dadurch gekennzeichnet, dass** die Antriebsmittel (15) einen Satz von Spannschlössern (16) umfassen, die ausgeformt sind, um abwechselnd den Übergang von einer Arbeitsposition in eine Rückzugsposition der Form (3) zu gewährleisten.

5. Werkzeugsatz (1) nach einem der Ansprüche 2 oder 3, **dadurch gekennzeichnet, dass** die Antriebsmittel (15) einen Satz von Umreifungen (29, 31) umfassen, die ausgeformt sind, um abwechselnd den Übergang von einer Arbeitsposition in eine Rückzugsposition der Form zu gewährleisten.

6. Werkzeugsatz (1) nach einem der Ansprüche 1 bis 5, **dadurch gekennzeichnet, dass** er Mittel zum Halten (9) der Form (3) und Mittel zum Zentrieren (13, 23) der Form umfasst.

7. Werkzeugsatz (1) nach einem der Ansprüche 1 bis 6, **dadurch gekennzeichnet, dass** die Form (3) mindestens einen zusätzlichen feststehenden Teil (35) umfasst, der ausgeformt ist, um mindestens einen Einhüllungs- und Polymerisationsvorgang von mindestens einer nicht konvexen Oberfläche des Werkstücks zu unterstützen.

8. Werkzeugsatz (1) nach einem der Ansprüche 1 bis 6, **dadurch gekennzeichnet, dass** die Form (3) mindestens einen zusätzlichen flexiblen Teil (57) aufweist, der ausgeformt ist, um mindestens einen Einhüllungs- und Polymerisationsvorgang von mindestens einer konvexen Oberfläche des Werkstücks zu unterstützen.

9. Werkzeugsatz (1) nach einem der Ansprüche 7 oder 8, **dadurch gekennzeichnet, dass** der flexible Teil (4) der Form abwechselnd mit den zusätzlichen feststehenden (35) und flexiblen (57) Teilen über Verbindungsmittel verbunden ist, die Abdichtmittel (47, 53) und Mittel zum Festhalten der Teile der Form (3) umfassen.

10. Werkzeugsatz (1) nach einem der Ansprüche 1 bis 9, **dadurch gekennzeichnet, dass** das herzustellende Werkstück eine einstückige bewegliche Abdeckung einer Schubumkehr für eine Gondel eines Turbotriebwerks ist.

11. Verfahren zum Herstellen eines Werkstücks aus Verbundwerkstoff, das einen Umfang von mehr als 180° aufweist, wie eine einstückige bewegliche Abdeckung einer Schubumkehr einer Gondel für ein Turbotriebwerk, und mindestens eine konvexe innere Oberfläche umfassend, **dadurch gekennzeichnet, dass** es die folgenden Schritte umfasst, die darauf abzielen:
- den Werkzeugsatz (1) nach einem der Ansprüche 1 bis 10 in einer Position zu positionieren, die einer Arbeitsposition der Form (3) entspricht, bei der die Form mindestens einen Einhüllungs- und Polymerisationsvorgang unterstützt;
- mindestens einen Falz auf einer konvexen Oberfläche der Form anzubringen;
- die Falze zu polymerisieren;
- den Werkzeugsatz in einer Position zu positionieren, die einer Rückzugsposition der Form entspricht, in der sich die Form in zurückgezogener Position im Verhältnis zu ihrer Arbeitsposition befindet;
- das hergestellte Werkstück (28) zu entnehmen indem man das Werkstück oder die Form entnimmt.

## Claims

1. A tooling assembly (1) for manufacturing a part made of composite material (28) having a circumference greater than 180° such as an integral movable cowl of a thrust reverser of a nacelle for a turbojet engine and comprising at least one convex surface, said assembly comprising a single mold (3) made in one-piece defining at least partly the lines of said convex surface and shaped to support in a working position at least one drape-molding and polymerization operation of said part to be manufactured, said mold having at least one flexible portion (4, 33) alternately between said first working position and a second position called removal position in which the mold is in the retracted position relative to its working position, said flexible portion (4, 33) having a circumference greater than 180° and defining the lines of the surface of the part to be manufactured, said assembly being **characterized in that** at least the flexible portion (4, 33) of the mold (3) has at least one convex surface about an axis perpendicular to the axis of revolution of the mold and whose ends (21a, 21b) delimit an unclosed portion (17) in a direction substantially parallel to an axis of revolution (19) of the mold.

2. The tooling assembly (1) according to claim 1, **characterized in that** the alternative passage between a working position and a removal position of the mold is ensured thanks to drive means (15) of the flexible portion of the mold.

3. The tooling assembly (1) according to any of claims 1 or 2, **characterized in that** the thickness of the flexible portion (4, 33) of the mold (3) is variable.

4. The tooling assembly (1) according to any one of claims 2 or 3, **characterized in that** the drive means (15) comprise a set of turnbuckles (16) shaped to alternately ensure the passage from a working position to a removal position of the mold (3).

5. The tooling assembly (1) according to any one of claims 2 or 3, **characterized in that** the drive means (15) comprise a set of strappings (29, 31) shaped to alternately ensure the passage from a working position to a removal position of the mold.

6. The tooling assembly (1) according to any one of claims 1 to 5, **characterized in that** it comprises means (9) for supporting the mold (3) and means (13, 23) for centering the mold.

7. The tooling assembly (1) according to any one of claims 1 to 6, **characterized in that** the mold (3) comprises at least one additional fixed portion (35) shaped to support at least one drape-molding and polymerization operation of at least one non-convex surface of said part.

8. The tooling assembly (1) according to any one of claims 1 to 6, **characterized in that** the mold (3) has at least one additional flexible portion (57) shaped to support at least one drape-molding and polymerization operation of at least one convex surface of said part.

9. The tooling assembly (1) according to any one of claims 7 or 8, **characterized in that** the flexible portion (4) of the mold is alternately connected to said additional fixed (35) and flexible (57) portions via junction means comprising sealing means (47, 53) and holding means of said portions of the mold (3).

10. The tooling assembly (1) according to any one of claims 1 to 9, **characterized in that** the part to be manufactured is an integral movable cowl of a thrust reverser for a turbojet engine nacelle.

11. A method for manufacturing a part made of composite material having a circumference greater than 180° such as an integral movable cowl of a thrust reverser of a nacelle for a turbojet engine and comprising at least one convex inner surface, **characterized in that** it comprises the following steps of:
- positioning the tooling assembly (1) in accordance with any one of claims 1 to 10 in a position corresponding to a working position of the mold (3) in which said mold supports at least one drape-molding and polymerization operation;
- disposing at least one plie on a convex surface of the mold;
- polymerizing said plies;
- positioning said tooling assembly in a position corresponding to a removal position of the mold in which said mold is in the retracted position relative to its working position;
- removing the manufactured part (28) by removing said part or said mold.
